(19) Europäisches Patentamt
European Patent Office
Office européen des brevets

(11) **EP 3 099 013 B1**

## (12) EUROPEAN PATENT SPECIFICATION

(45) Date of publication and mention
of the grant of the patent:
**15.01.2020 Bulletin 2020/03**

(51) Int Cl.:
*H04L 12/14* *(2006.01)*      *H04L 12/24* *(2006.01)*
*H04M 15/00* *(2006.01)*

(21) Application number: **15305832.6**

(22) Date of filing: **29.05.2015**

(54) **PROVIDING A QOE-DEPENDENT CHARGING RATE**

BEREITSTELLUNG EINES QOE-ABHÄNGIGEN GEBÜHRENSATZES

FOURNITURE D' UN TAUX DE FACTURATION DÉPENDANT DE LA QOE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.11.2016 Bulletin 2016/48**

(73) Proprietor: **Alcatel Lucent
91620 Nozay (FR)**

(72) Inventors:
• **Pareek, Reena
Rajasthan 302018 (IN)**
• **Sachdeva, Aneet Kaur
122016 Gurgaon (IN)**

(74) Representative: **Bryers LLP
7 Gay Street
Bath, Bath and North East Somerset BA1 2PH
(GB)**

(56) References cited:
**EP-A1- 2 154 647**      **WO-A1-2008/119930**
**WO-A1-2013/159794**

• **PETER REICHL ET AL: "A fixed-point model for
QoE-based charging", FUTURE
HUMAN-CENTRIC MULTIMEDIA NETWORKING,
ACM, 2 PENN PLAZA, SUITE 701 NEW YORK NY
10121-0701 USA, 16 August 2013 (2013-08-16),
pages 33-38, XP058030675, DOI:
10.1145/2491172.2491176 ISBN:
978-1-4503-2183-9**
• **NOKIA: "Gx Charging Key", 3GPP DRAFT;
N3-040504, 3RD GENERATION PARTNERSHIP
PROJECT (3GPP), MOBILE COMPETENCE
CENTRE ; 650, ROUTE DES LUCIOLES ; F-06921
SOPHIA-ANTIPOLIS CEDEX ; FRANCE, vol. CN
WG3, no. Sophia Antipolis, France; 20040820, 20
August 2004 (2004-08-20), XP050077066,
[retrieved on 2004-08-20]**

**Description**

TECHNICAL FIELD

Aspects relate, in general, to a method for providing a charging rate, a monitoring engine, a network node and a computer program product.

BACKGROUND

Telecommunication network service providers can provide voice and/or data services to subscribers such as telephony, Internet access, broadcasting or multicasting of audio, video, and multimedia programming, and so on. User equipment, such as cell phones, smart phones and so on access the services provided by the communication networks over an air interface with one or more network base stations. Communication between user equipment and base stations are governed by various standards and/or protocols, such as the standards and protocols defined by the 3rd Generation Partnership Project (3GPP, 3GPP2).

Service providers can use offline and online charging functions for charges incurred by users of the various services. Online charging typically affects the service rendered in real-time and a direct interaction of the charging mechanism with session/service control is therefore used. For example, charging information for network resource usage is collected concurrently with the resource usage. However, authorization for the network resource usage must be obtained by the network prior to the actual resource usage. Offline charging is generally defined as a charging mechanism where charging information does not affect the service rendered in real-time. In offline charging, charging information for network resource usage is collected concurrently with resource usage.

A Charging Trigger Function (CTF) for online charging can trigger on execution of a charging event, collect charging information and assemble the charging information into matching charging events. Typically, the CTF then transmits credit request messages to an Online Charging System (OCS) to obtain authorization for the charging event/network resource usage requested by the user.

Published international application WO 2013/159794 discloses a method of modifying the quality of a connection between a terminal and an application server of a network comprising sending, by the terminal, a quality modification request for a desired modification of a quality of a service provided by the application server and determining, by the network, a condition of the connection to be modified based on the quality modification request. The determined condition to be modified is associated with the quality of the provided service. The method comprises determining, by the network, a charging price for the determined condition of the connection to be modified, modifying, by the network, a condition of the connection, and charging, by the network, for modifying the condition of the connection.

Published European patent application EP 2154 647 A1 discloses a method and arrangement for user-controlled quality of experience assignment between services. A quality of experience optimiser dynamically controls the quality of a plurality of applications available to an end user via a communications network. The optimiser collects information from the applications relating to their statuses and associated flows and reports them to the user, and also accepts inputs from the user concerning a desired relative priority the applications. The flow of at least one of the applications is changed in accordance with the user's desired relative priority.

Peter Reichl et al: "A fixed-point model for QoE-based charging", ISBN: 978-1-4503-2183-9, describes a model for internet charging and pricing based on quality of experience.

Nokia: "Gx Charging Key", 3GPP DRAFT; N3-040504, 3rd Generation Partnership Project (3GPP), Mobile Competence Centre; 650, Route Des Lucioles; F-06921 Sophia-Antipolis Cedex; France, vol. CN WG3, no. Sophia Antipolis, France; 2004082, 20 August 2004, XP050077066, introduces a charging key which is part of a charging rule.

SUMMARY

According to an example, there is provided a method, in a wireless telecommunication network, for providing a charging rate associated with a data session for user equipment, the method comprising receiving a trigger-type attribute-value pair (AVP) at a monitoring engine of a network gateway from an online charging system, monitoring the data session to accumulate quality of experience data for the data session by monitoring the attribute-value pair, generating a measure of a quality of experience of the data session for user equipment using the monitoring engine of the network gateway, transmitting the quality of experience attribute-value pair to the online charging system from the network gateway, and determining, at the online charging system, OCS, module of the network a charging rate for the data session using the generated measure of quality of experience. The trigger-type AVP can be transmitted to the network gateway in response to a message from the network gateway for the OCS to initiate charging. The AVP can be a grouped AVP comprising sub-AVPs representing multiple respective parameters for a network quality of experience attribute. The quality of experience AVP can comprise one or more values representing respective weighted combinations of multiple parameters for a network quality of experience attribute. The network gateway can be preconfigured to monitor for initiation of the data session. The method further comprise selecting a charging rate for the data session according to one or more rules that map respective ones of multiple charging rates to respective predefined ranges for the measure of a quality of experience of the data session. A quality of experience attribute-value pair can be provided continuously or periodically to an OCS module of the network for the duration of the data session.

According to an example, there is provided a network node comprising a monitoring engine operable to receive data relating to the quality of experience of a data session for user equipment, wherein the monitoring engine is operable to monitor and capture data for quality of experience metrics upon receipt of an enumerator value in a received trigger-type attribute-value pair from an online charging system, and generate a measure of the quality of experience of the data session and transmit the quality of experience attribute-value pair to the OCS module of the network, the OCS module being operable to determine a charging rate for the data session using the generated measure of quality of experience.

According to an example, there is provided a computer program product, comprising a computer usable medium having computer readable program code embodied therein, said computer readable program code adapted to be executed to implement a method for providing a charging rate associated with a data session for user equipment as provided herein.

BRIEF DESCRIPTION OF THE DRAWINGS

Embodiments will now be described, by way of example only, with reference to the accompanying drawings, in which:

Figure 1 is a schematic representation of a variation over time of the QoE for a subscriber;

Figure 2 is a schematic representation of a portion of a network according to an example;

Figure 3 is a schematic representation of a monitoring tool according to an example;

Figure 4 is a schematic representation of a set of rules configured in OCS according to an example; and

Figure 5 is a schematic representation of a network message flow according to an example.

DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, and alternatives falling within the scope of the appended claims should be included, the scope of the invention being defined by the appended claims. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

Charging of voice and data calls or sessions is currently based on the requested or negotiated Quality of Service (QoS) that represents the overall performance of network in terms of the session in question. Quality of service is a quantitative measure and as such several aspects of the network service are often considered in determining a measure for it, such as error rates, bandwidth, throughput, transmission delay, availability, jitter. Various parameters including guaranteed/minimum/maximum bitrate for the session are provided in order to try to enforce a QoS for a subscriber.

However, the actual quality experienced by the subscriber may differ significantly across the session time period due to network characteristics such as link/channel condition, weather and environmental conditions, subscriber equipment attributes, power constraints and so on. As such, the QoS experienced by a subscriber for a particular session may not accord with the QoS that the network attempts to enforce or maintain. The charging rate of the session does not vary in line with varying QoS. Accordingly, a degraded quality experienced by the subscriber due to unforeseen reasons that a network operator may not be able to control does not result in a reduced or modified charge.

Accordingly, QoS is a quantitative measure related to the monitoring of discreet network infrastructure components such as servers, routers, or network traffic (IP packets, transport stream, and so on). The metrics used in connection with a QoS measure can be device or transport-oriented such as CPU, memory use, packet loss, delay or jitter. Such metrics do not provide an evaluation of the quality of a service as seen by the subscriber.

Quality of Experience (QoE) performance indicators are therefore used to provide a user-centric measure of the quality of a service as experienced by a subscriber or end-user. For example, time to download a webpage or access an application, place a phone call, log into an interactive service, and measuring video & audio quality.

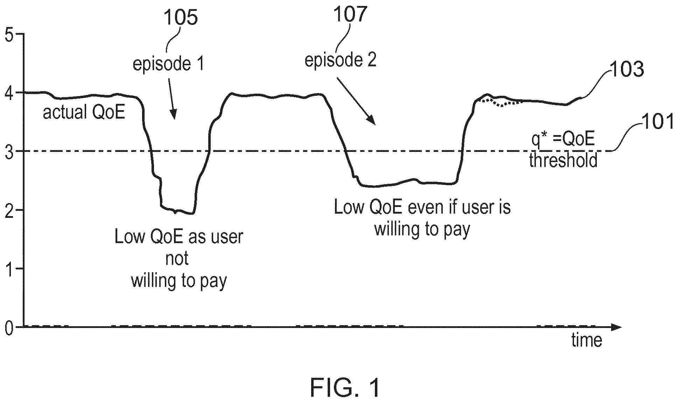

Figure 1 is a schematic representation of a variation over time of the QoE for a subscriber. A QoE threshold 101 provides a measure of the minimum acceptable QoE for a subscriber. The actual QoE 103 for a subscriber is depicted. Over time, the actual QoE 103 varies, and there are instances 105, 107 where it drops below the threshold value 101. Typically, there may be two scenarios related to a drop in QoE for a subscriber - the first is a drop in actual QoE below the threshold resulting in a period of degraded QoE because the subscriber is not willing to pay for service that enables the experience to at least meet the threshold. The other scenario is a drop in actual QoE below the threshold resulting in a period of degraded QoE. In this case, the subscriber may be willing to pay for a service in order to enable the QoE to at least meet the threshold, but network and/or environmental issues mean that the QoE is uncontrollably degraded.

Accordingly, the charging of a session, such as a voice or data session for a subscriber, does not vary according to the degraded quality experienced by the subscriber due to unforeseen issues that the operator might not be able to control.

According to an example, an attribute-value pair (AVP) can be provided for use with an authentication, authorization, and accounting protocol such as Diameter for example. The Diameter interface provides connection among network nodes to enable essential service provider network functions such as authentication, online and offline billing, and policy and charging. The new AVP, which can be termed QoE AVP, provides new information to the OCS (online charging system) that would assist in rating and charging based on measured quality of experience for the data session.

The QoE AVP contains data representing a relevant metric measured in relation to QoS, such as jitter/buffering/frame delay/packet loss and so on. There are numerous pre-existing tools for monitoring QoE. One of these tools (for example, Alcatel-Lucent 'Video Inspector' tool) can co-exist with the PGW/SGW of a network or logically reside before PGW/SGW and can be used for monitoring QoE.

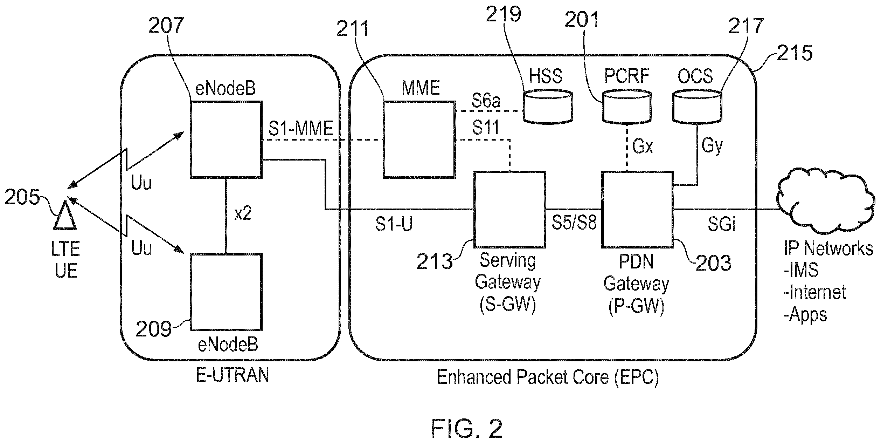

Figure 2 is a schematic representation of a portion of a network according to an example. QoS is currently managed and enforced by the Policy and Charging Rules Function (PCRF) 201 and PCEF (or P-GW 203) respectively as per the data bundle (or pack) currently subscribed to by the user (2G/3G/4G) who may be using UE 205. The UE communicates with one or more nodes (eNB) 207, 209. The nodes are linked with a mobility management entity (MME) 211 and serving gateway (S-GW) 213 of the network core 215. Online charging system (OCS) 217 is provided to charge the network subscribers based on service usage. The home subscriber server (HSS) 219 is typically a user database that supports the network entities that handle calls for example, and it contains subscription-related information (subscriber profiles), performs authentication and authorization of the user 205, and can provide information about the subscriber's location and IP information.

As noted, the QoS may not be consistent throughout the session as committed by the operator resulting in a variation of QoE that provides a degraded subscriber experience at certain times within a session. In order to charge the user as per an actual experienced quality of service in the current data session, quality parameters (like packet delay/frame deviation/packet corruption and so on) are monitored /captured.

A monitoring tool deployed on PGW or a node before can capture these parameters. In an LTE network, these parameters are formulated as "3GPP-QoE-Metrics" attributes in a Packet Switched Streaming (PSS) protocol service. No enhancement is required as "3GPP-QoE-Metrics" already exist. Accordingly, a new QoE AVP can be provided using the existing attributes.

According to an example, QoE metrics received or calculated at a PGW can be converted into AVPs to be sent to the OCS (online charging system) for charging. The OCS can read these AVPs and charge the data session as per a rule configured for QoE charging. In an example, the PGW can be pre-configured to begin monitoring for a specific data session, and the same can be communicated to the OCS by sending an existing AVP [Trigger-Type] message. A new enumeration value 'Monitor-QoE' can be defined for the [Trigger-Type] AVP. A trigger type AVP message is typically used to initiate authorisation or re-authorisation of a subscriber quota or allowance in response to an event, such as a voice or data session for example.

There are a number of mid-session service events (re-authorisation triggers), which could affect the rating of the current service usage, e.g. end user QoS changes or location updates. When allocating resources, the server may instruct the credit control client to re-authorize the quota upon a number of different session related triggers that can affect the rating conditions. The server instructs the Network Element to monitor for such events by using the Trigger AVP containing one or more Trigger-Type AVPs in the CCA command. These events are in addition to the static triggers defined in the service specific document (middle tier TS). Once the OCS has armed one or more triggers using the Trigger AVP at the Network Element, these triggers shall remain in effect until another Trigger AVP is received for the same Rating Group, where the Network Element shall arm all triggers present in the Trigger AVP and reset all other triggers. The presence of the Trigger AVP without any Trigger-Type AVPs in a CCA allows OCS to disable all the triggers that were armed in a previous Trigger AVP.

The pre-configuration on PGW can be on the basis of:

1. Region wise
2. Subscriber complaints for bad data session quality.
3. All subscribers
4. Privileged subscribers
5. Any other criteria

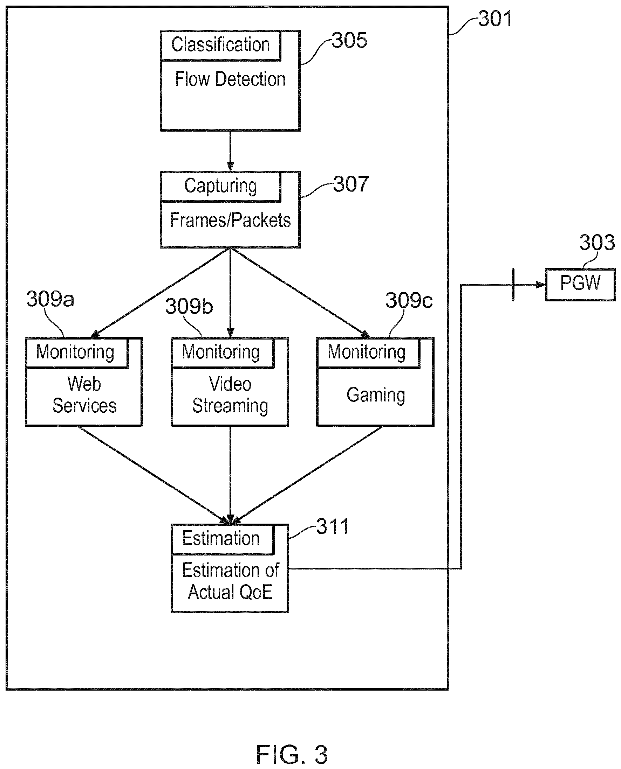

Figure 3 is a schematic representation of a monitoring tool according to an example. Monitoring tool 301 can be provided as part of a P-GW 303 of a network, which can be referred to as a network gateway or node. A classification module 305 can detect packets for which a QoE measurement is desired, such as video streaming, gaming and so on and forward selected packets relating to data that maps to a service for which a QoE measurement is desired to a capturing module 307. Module 307 is operable to receive selected frames/packets from a relevant data flow and pass those frames/packets to respective monitoring modules 309a-c that can monitor the frames/packets relating to specific data flows such as for web services, video streaming and gaming and so on. There may be a larger number of monitoring modules present, and only three are shown for the sake of clarity. An estimation module 311 can estimate the actual QoE for a subscriber based on quality of experience related metrics such as video stalling, buffering and so on, and provide the QoE measure to the PGW 303.

A structure for a QoE AVP is provided below. This AVP can be defined as a grouped AVP having Sub-AVPs representing parameters of a "3GPP-QoE-Metrics" attribute:

[QoE AVP]

[Buffering_indicator]
[Corrupt_packet_loss_indicator]
[FrameDev_Jitter_switch_indicator]
[Codec_indicator]

The "3GPP-QoE-Metrics" attribute has following parameters:

a) Corruption duration metric - Corrupted frame is a media frame that has quality degradation.
b) Rebuffering duration metric - Rebuffering is defined as any stall in playback time due to any involuntary event at the client side.
c) Initial buffering duration metric - Initial buffering duration is the time from receiving the first media packet until playing starts.
d) Successive loss of RTP packets - This parameter indicates the number of RTP packets lost in succession per media channel.
e) Frame rate deviation - Frame rate deviation happens when the actual playback frame rate during a measurement period is deviated from a pre-defined value.
f) Jitter duration - Jitter happens when the absolute difference between the actual playback time and the expected playback time is larger than a pre-defined value.
g) Content Switch Time - The content switch time is the time that elapses between the initiation of the content switch by the user and up to the time of reception of the first media packet from the new content or media stream.
h) Average Codec Bitrate - bitrate used for coding "active" media information during the measurement resolution period.
i) Codec Information - The codec information metrics contain details of the media codec used during the measurement period.
j) Buffer Status - The buffer depth is the number of seconds of future media which resides in the buffer.

These parameters can be grouped/categorized as a sub-AVP of [QoE AVP] as per their type as follows:

1. Buffer Indicator:

> Sub-AVP Name [Buffering_indicator]
> Sub-AVP Type [Unsigned32]

It includes Rebuffering duration metric/Initial buffering duration metric/Buffer Status parameters of 3GPP-QoE-Metrics as defined above.

2. Corrupt_packet_loss_indicator:

> Sub-AVP Name [Corrupt_packet_loss_indicator]
> Sub-AVP Type [Unsigned32]

It includes Corruption duration metric / Successive loss of RTP packets parameters of 3GPP-QoE-Metrics as defined above.

3. FrameDev_jitter_switch_indicator:

> Sub-AVP Name [FrameDev_Jitter_switch_indicator]
> Sub-AVP Type [Unsigned32]

It includes Frame rate deviation / Jitter duration/ Content Switch Time parameters of 3GPP-QoE-Metrics as defined above.

4. Codec_indicator:

> Sub-AVP Name [Codec_indicator]
> Sub-AVP Type [Unsigned32]

It includes Average Codec Bitrate / Codec Information parameters of 3GPP-QoE-Metrics as defined above.

All these sub-avps can contain the value in percentage format. The PGW can assign appropriate weights to each group of parameters and then weighted average for the same can be taken out.

For example, for the Sub-AVP [Buffer Indicator] assigned weights are:

> W1 for Rebuffering duration metric;
> W2 for Initial buffering duration metric;
> W3 for Buffer Status

The weighted average value (Wght_Buff) can be calculated as:

$$\frac{W1*(Rebuffering\ duration)+W2*(Initial\ buffering\ duration) - W3*(Buffer\ Status)}{3(W1+W2+W3)} = Wght\_Buff$$

The 'Rebuffering duration' and 'Initial buffering duration' are negative parameters. That is, both of these parameters define the duration in seconds for which buffering was occurring and no video was being played to the subscriber. On the other hand, 'Buffer Status' is a positive indicator and indicates the number of seconds for which buffering has already been done for future video play. That is the reason 'Buffer Status' weight is subtracted from other parameters.

Now, the % for the slice duration is calculated as:

$$\frac{\text{Wght\_Buff} * 100}{\text{Dur}} = [\text{Buffer-Indicator}]$$

Where Dur is Slice Duration.

According to an example, the % value is calculated as OCS will typically not understand the exact values. Exact values may differ invariably on each data session for each service. A 60% or 80% [Buffer-Indicator] provides a better representation.

As stated above, an enhancement in a PGW can be provided to perform these conversions, and the PGW can form these AVPs and send them to OCS during the data session for each slice. OCS can preform or specify charging according to these values.

The Sub-AVPs define QoE in a negative sense. Hence, the lower the values in these AVPs, the higher the QoE for the subscriber. Conversely, the higher the values in these AVPs, the lower the QoE for the subscriber. For example, an 80% value of [Buffer-Indicator] indicates very high buffering performed for the current session or indicates lots of stoppages in a video stream. However, a 20% value indicates low buffering and a smooth or good experience for the subscriber. Hence, a lower tariff can be provided for the 80% case, and a higher tariff can be configured in OCS for the 20% case. OCS can either define thresholds for these parameters to differentiate charging or use these values as it is. For example, a percentage range for an AVP can map to a charging level in a tiered charging structure. For example, an AVP falling in a range from 60-80% can result in selection or application of a low tariff in a charging structure, whereas a value falling in a range 0-20% can result in selection or application of a high tariff in a chrarging structure.

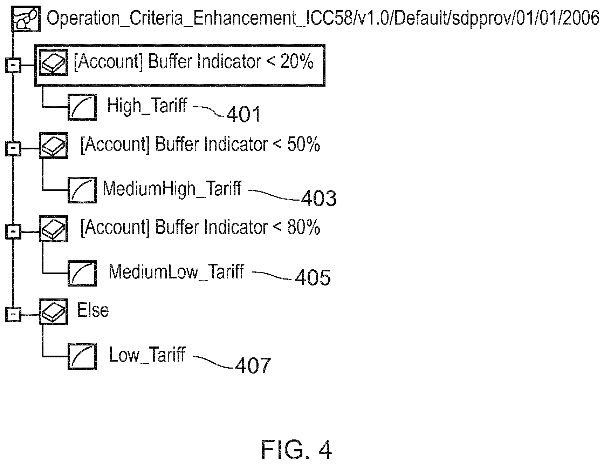

Figure 4 is a schematic representation of a set of rules configured in OCS according to an example. As depicted in figure 4, for the example of Buffer Indicator parameter, if the value of the same is <20% a high tariff 401 can be selected. For values between 20-50%, a medium-high tariff 403 can be selected. For values between 50-80%, a medium-low tariff 405 can be selected. In all other case, that is, when the value for the parameter is more than 80%, a low tariff 407 can be selected.

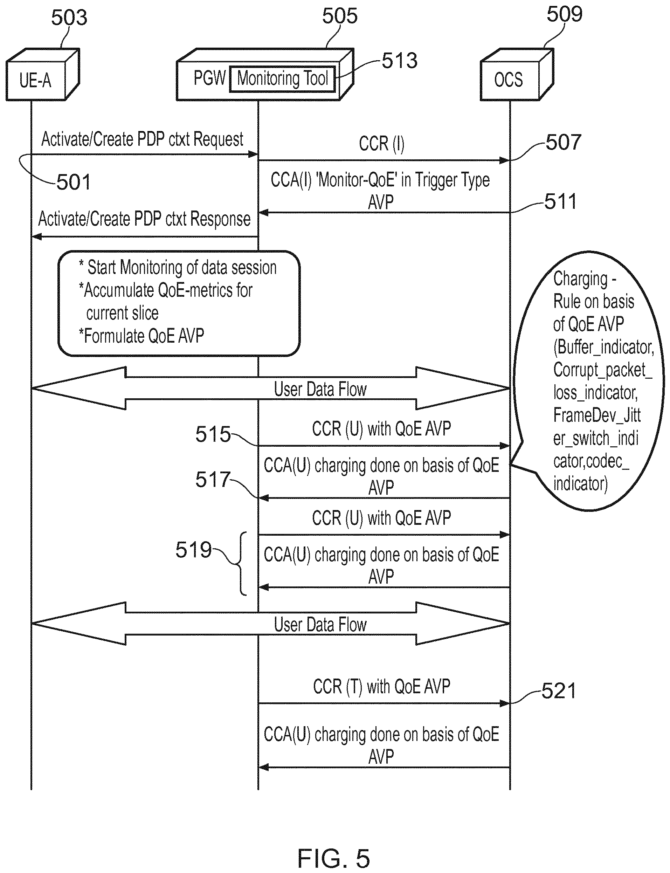

Figure 5 is a schematic representation of a network message flow according to an example. At 501 a subscriber initiates a data session from his mobile station (UE) 503. A PGW (or GGSN) 505 is pre-configured to monitor QoE for the data session. The PGW (or GGSN) node 505 transmits a Diameter (or similar) credit control request message CCR (I) 507 to initiate charging at OCS 509. OCS 509 acknowledges it and sends back a CCA(I) message 511 with [Trigger Type] AVP filled as 'Monitor-QoE'. On receiving response CCA(I) from OCS 509, a monitoring node 513 embedded in PGW 505 starts monitoring and capturing data for relevant metrics and then convert it into the % format as explained above. After exhaustion of the current slice (session), PGW 505 sends a CCR(U) message 515 to OCS 509 to request QoE new quantities and also in order to notify the quantities used for charging as currently being used. Along with these existing AVPs, PGW 505 can transmit:

[QoE]

    [Buffering_indicator]
    [Corrupt_packet_loss_indicator]
    [FrameDev_Jitter_switch_indicator]
    [Codec_indicator]

QoE AVP and its Sub-AVPs with values calculated as above would also be sent to OCS 509 to apply differential charging.

OCS 509 can charge the current data slice (session) as per the charging rule defined for the QoE and would send back a CCA(U) message 517. Multiple such CCR(U) and CCA(U) messages 519 can be exchanged between PGW 505 and OCS 509 as long as the data session exists. At the end of the data session, a CCR(T) message 521 with [QoE] AVP can be sent to OCS 509 (along with existing AVPs). OCS 509 can charge the last slice as per the [QoE] received (and other AVPs currently received) and terminate the session.

Accordingly, a subscriber will pay based on the quality of experience of a service or session, and an operator is able to manage privileged customers by giving a pay-as-you-experience service. The operator can focus region-wise where network traffic is high, such as metro cities for example, and the feature can act as a trust builder between the subscriber and the operator as the subscriber is charged only for the rendered service. In an example, there can be an amalgamation of a monitoring tool at a P-GW for a data session, and an application level enhancement in the P-GW to support new AVP. An application level enhancement can be provided in the OCS to support the new AVP.

The present inventions can be embodied in other specific apparatus and/or methods. The described embodiments are to be considered in all respects as illustrative and not restrictive. In particular, the scope of the invention is indicated by the appended claims rather than by the description and figures herein.

**Claims**

1. A method, in a wireless telecommunication network, for providing a charging rate associated with a data session for user equipment (205), the method comprising:

   receiving a trigger-type attribute-value pair at a monitoring engine (301, 513) of a network gateway (203, 303) from an online charging system (217, 509);
   monitoring the data session to accumulate quality of experience data (103) for the data session;
   generating a measure (101, 105, 107) of a quality of experience of the data session for user equipment (205) using the monitoring engine (301, 513) of the network gateway (203, 303), said measure of quality of experience being an attribute-value-pair;
   transmitting the quality of experience attribute-value pair to the online charging system (217, 509) from the network gateway (203, 303); and
   determining at the online charging system module (217, 509) of the network a charging rate for the data session using the generated measure (101, 105, 107) of quality of experience.

2. A method as claimed in claim I, wherein the trigger-type attribute-value pair is transmitted to the network gateway (203, 303) in response to a message from the network gateway (203, 303) for the online charging system (217, 509) to initiate charging.

3. A method as claimed in claim I, wherein the quality of experience attribute-value pair is a grouped attribute-value pair comprising sub- attribute-value pairs representing multiple respective parameters for a network quality of experience attribute.

4. A method as claimed in claim 3, wherein the quality of experience attribute-value pair comprises one or more values representing respective weighted combinations of multiple parameters for a network quality of experience attribute.

5. A method as claimed in any preceding claim, wherein the network gateway (203, 303) is preconfigured to monitor for initiation of the data session.

6. A method as claimed in any preceding claim, further comprising:
   selecting a charging rate for the data session according to one or more rules that map respective ones of multiple charging rates (401, 403, 405, 407) to respective predefined ranges for the measure (101, 105, 107) of a quality of experience of the data session.

7. A method as claimed in any preceding claim, further comprising:
   continuously providing a quality of experience attribute-value pair to the online charging system module (217, 509) of the network for the duration of the data session.

8. A network node (301, 505) comprising a monitoring engine (513) operable to:

   receive data (103) relating to the quality of experience of a data session for user equipment (205), wherein the monitoring engine (513) is operable to monitor and capture the data for quality of experience metrics (103) upon receipt of an enumerator value in a received trigger-type attribute-value pair from an online charging system (217, 509); and
   generate a measure (101, 105, 107) of the quality of experience of the data session, said measure being an attribute-value-pair, and transmit the quality of experience attribute-value pair to the online charging system (217, 509) module of the network, the online charging system module (217, 509) being operable to determine a charging rate for the data session using the generated measure (101, 105, 107) of quality of experience.

9. A computer program product, comprising a computer usable medium having computer readable program code embodied therein, said computer readable program code being adapted, when executed on a computer, to cause said computer to perform a method for providing a charging rate associated with a data session for user equipment (205) as claimed in any of claims to 7.

**Patentansprüche**

1. Verfahren in einem drahtlosen Telekommunikationsnetz zum Bereitstellen eines zu einer Datensitzung für ein Nutzergerät (205) gehörigen Gebührensatzes, wobei das Verfahren Folgendes umfasst:

   Empfangen eines auslösenden Attribut-Wert-Paars an einer Überwachungs-Engine (301, 513) eines Netz-Gateways (203, 303) von einem Online-Gebührenerfassungssystem (217, 509),
   Überwachen der Datensitzung, um Daten (103) zur Benutzererfahrungsqualität (Quality of Experience) für die Datensitzung zu sammeln,
   Erzeugen eines Maßes (101, 105, 107) einer Benutzererfahrungsqualität der Datensitzung für das Nutzergerät (205) mittels der Überwachungs-Engine (301, 513) des Netz-Gateways (203, 303), wobei es sich bei dem Maß der Benutzererfahrungsqualität um ein Attribut-Wert-Paar handelt,
   Übertragen des Attribut-Wert-Paars zur Benutzererfahrungsqualität von dem Netz-Gateway (203, 303) an das Online-Gebührenerfassungssystem (217, 509) und
   an dem Online-Gebührenerfassungssystem-Modul (217, 509) des Netzes erfolgendes Bestimmen eines Gebührensatzes für die Datensitzung mittels des erzeugten Maßes (101, 105, 107) der Benutzererfahrungsqualität.

2. Verfahren nach Anspruch 1, wobei das auslösende Attribut-Wert-Paar in Reaktion auf eine Nachricht von dem Netz-Gateway (203, 303) an das Online-Gebührenerfassungssystem (217, 509) zum Einleiten der Gebührenerfassung an das Netz-Gateway (203, 303) übertragen wird.

3. Verfahren nach Anspruch 1, wobei es sich bei dem Attribut-Wert-Paar zur Nutzererfahrungsqualität um ein gruppiertes Attribut-Wert-Paar handelt, das untergeordnete Attribut-Wert-Paare umfasst, die mehrere jeweilige Parameter für ein Netz-Nutzererfahrungsqualitäts-Attribut repräsentieren.

4. Verfahren nach Anspruch 3, wobei das Attribut-Wert-Paar zur Nutzererfahrungsqualität einen oder mehrere Werte umfasst, die jeweilige gewichtete Kombinationen aus mehreren Parametern für ein Netz-Nutzererfahrungsqualitäts-Attribut repräsentieren.

5. Verfahren nach einem der vorhergehenden Ansprüche, wobei das Netz-Gateway (203, 303) dafür vorkonfiguriert ist, auf eine Einleitung der Datensitzung zu überwachen.

6. Verfahren nach einem der vorhergehenden Ansprüche, ferner umfassend:
   Auswählen eines Gebührensatzes für die Datensitzung gemäß einer oder mehreren Regeln, die aus mehreren Gebührensätzen (401, 403, 405, 407) jeweilige Gebührensätze jeweiligen vordefinierten Spannen für das Maß (101, 105, 107) einer Nutzererfahrungsqualität der Datensitzung zuordnen.

7. Verfahren nach einem der vorhergehenden Ansprüche, ferner umfassend:
   kontinuierliches Bereitstellen eines Attribut-Wert-Paars zur Benutzererfahrungsqualität an das Online-Gebührenerfassungssystem-Modul (217, 509) des Netzes für die Dauer der Datensitzung.

8. Netzknoten (301, 505), der eine Überwachungs-Engine (513) umfasst, die betriebsfähig ist, um:

   die Nutzererfahrungsqualität einer Datensitzung für ein Nutzergerät (205) betreffende Daten (103) zu empfangen,
   wobei die Überwachungs-Engine (513) betriebsfähig ist, nach Empfang eines Zählerwerts in einem von einem Online-Gebührenerfassungssystem (217, 509) empfangenen auslösenden Attribut-Wert-Paar die Daten für Nutzererfahrungsqualitätsmetrik (103) zu überwachen und zu erfassen, und
   ein Maß (101, 105, 107) der Nutzererfahrungsqualität der Datensitzung zu erzeugen, wobei es sich bei dem Maß um ein Attribut-Wert-Paar handelt,
   und das Attribut-Wert-Paar zur Nutzererfahrungsqualität an das Online-Gebührenerfassungssystem- (217, 509) Modul des Netzes zu übertragen, wobei das Online-Gebührenerfassungssystem-Modul (217, 509) betriebsfähig ist, mittels des erzeugten Maßes (101, 105, 107) der Nutzererfahrungsqualität einen Gebührensatz für die Datensitzung zu bestimmen.

9. Computerprogrammprodukt, umfassend ein durch einen Computer verwendbares Medium, das in diesem enthaltenen computerlesbaren Programmcode aufweist, wobei der computerlesbare Programmcode geeignet ist, bei Ausführung auf einem Computer den Computer zu veranlassen, ein Verfahren zum Bereitstellen eines zu einer Datensitzung für ein Nutzergerät (205) gehörigen Gebührensatzes nach einem der Ansprüche 1 bis 7 durchzuführen.

**Revendications**

1. Procédé, dans un réseau de télécommunications sans fil, permettant de produire un tarif de facturation associé à une session de données pour un équipement d'utilisateur (205), le procédé comprenant :

   la réception d'une paire attribut-valeur de type déclencheur sur un moteur de surveillance (301, 513) d'une passerelle de réseau (203, 303) d'un système de facturation en ligne (217, 509) ;
   la surveillance de la session de données pour accumuler des données de qualité d'expérience (103) pour la session de données ;
   la génération d'une mesure (101, 105, 107) d'une qualité d'expérience de la session de données pour l'équipement d'utilisateur (205) au moyen du moteur de surveillance (301, 513) de la passerelle de réseau (203, 303), ladite mesure de qualité d'expérience étant une paire attribut-valeur ;
   la transmission de la paire attribut-valeur de qualité d'expérience au système de facturation en ligne (217, 509) depuis la passerelle de réseau (203, 303) ; et
   la détermination sur le module de système de facturation en ligne (217, 509) du réseau d'un tarif de facturation pour la session de données à l'aide de la mesure générée (101, 105, 107) de qualité d'expérience.

2. Procédé selon la revendication 1, dans lequel la paire attribut-valeur de type déclencheur est transmise à la passerelle de réseau (203, 303) en réponse à un message de la passerelle de réseau (203, 303) de lancement d'une facturation par le système de facturation en ligne (217, 509).

3. Procédé selon la revendication 1, dans lequel la paire attribut-valeur de qualité d'expérience est une paire attribut-valeur regroupée comprenant des sous-paires attribut-valeur représentant de multiples paramètres respectifs pour un attribut de qualité d'expérience de réseau.

4. Procédé selon la revendication 3, dans lequel la paire attribut-valeur de qualité d'expérience comprend une ou plusieurs valeurs représentant des combinaisons pondérées respectives de multiples paramètres pour un attribut de qualité d'expérience de réseau.

5. Procédé selon l'une quelconque des revendications précédentes, dans lequel la passerelle de réseau (203, 303) est préconfigurée pour surveiller le lancement de la session de données.

6. Procédé selon l'une quelconque des revendications précédentes, comprenant en outre :
   la sélection d'un tarif de facturation pour la session de données en fonction d'une ou plusieurs règles qui mettent en correspondance certains respectifs de multiples tarifs de facturation (401, 403, 405, 407) avec des plages prédéfinies respectives pour la mesure (101, 105, 107) d'une qualité d'expérience de la session de données.

7. Procédé selon l'une quelconque des revendications précédentes, comprenant en outre :
   la fourniture en continu d'une paire attribut-valeur de qualité d'expérience au module de système de facturation en ligne (217, 509) du réseau pendant la durée de la session de données.

8. Nœud de réseau (301, 505) comprenant un moteur de surveillance (513) pouvant fonctionner pour :

   recevoir des données (103) relatives à la qualité d'expérience d'une session de données pour un équipement d'utilisateur (205), dans lequel le moteur de surveillance (513) peut fonctionner pour surveiller et capturer les données pour les mesures de la qualité d'expérience (103) suite à la réception d'une valeur d'énumération dans une paire attribut-valeur de type déclencheur reçue depuis un système de facturation en ligne (217, 509) ; et générer une mesure (101, 105, 107) de la qualité d'expérience de la session de données, ladite mesure étant une paire attribut-valeur,
   et transmettre la paire attribut-valeur de qualité d'expérience au module de système de facturation en ligne (217, 509) du réseau, le module de système de facturation en ligne (217, 509) pouvant fonctionner pour déterminer un tarif de facturation pour la session de données à l'aide de la mesure générée (101, 105, 107) de qualité d'expérience.

9. Produit programme informatique, comprenant un support utilisable sur ordinateur comportant un code de programme lisible par ordinateur intégré dans celui-ci, ledit code de programme lisible par ordinateur étant conçu pour, lorsqu'il est exécuté sur un ordinateur, amener ledit ordinateur à exécuter un procédé de production d'un tarif de facturation associé à une session de données pour un équipement d'utilisateur (205) selon l'une quelconque des revendications 1 à 7.

FIG. 1

EP 3 099 013 B1

FIG. 2

EP 3 099 013 B1

FIG. 3

Operation_Criteria_Enhancement_ICC58/v1.0/Default/sdpprov/01/01/2006

[Account] Buffer Indicator < 20%

High_Tariff ～401

[Account] Buffer Indicator < 50%

MediumHigh_Tariff ～403

[Account] Buffer Indicator < 80%

MediumLow_Tariff ～405

Else

Low_Tariff ～407

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2013159794 A

- EP 2154647 A1

### Non-patent literature cited in the description

- **PETER REICHL et al.** *A fixed-point model for QoE-based charging,* ISBN 978-1-4503-2183-9

- Gx Charging Key. **NOKIA.** 3GPP DRAFT; N3-040504, 3rd Generation Partnership Project (3GPP). Mobile Competence Centre, 20 August 2004